# EUROPEAN PATENT SPECIFICATION

(11) **EP 2 273 805 B1**
(45) Date of publication and mention of the grant of the patent: **29.04.2015**
(21) Application number: 09825728.0
(22) Date of filing: 01.07.2009
(51) Int. Cl.: H04W 4/02, H04W 64/00

(54) **A USER REGION LOCATING METHOD AND EQUIPMENT**
VERFAHREN UND VORRICHTUNG ZUR LOKALISATION EINES BENUTZERBEREICHES
ÉQUIPEMENT ET PROCÉDÉ DE LOCALISATION DE ZONE D'UTILISATEUR

(30) Priority: 14.11.2008 CN 200810171865
(43) Date of publication of application: 12.01.2011
(73) Proprietor: Huawei Technologies Co., Ltd., Longgang District Shenzhen, Guangdong 518129 (CN)
(72) Inventor: ZHOU, Wen, Shenzhen Guangdong 518129 (CN)
(74) Representative: Thun, Clemens
(86) International application number: PCT/CN2009/072585
(87) International publication number: WO 2010/054553

(56) References cited:
- WO-A1-2007/051223
- CN-A- 1 852 555
- CN-A- 1 867 179
- CN-A- 1 913 697
- US-A1- 2003 148 771
- US-B1- 6 618 594
- "3rd Generation Partnership Project; Technical Specification Group Services and System Aspects; Functional stage 2 description of Location Services (LCS) (Release 7)", 3GPP STANDARD; 3GPP TS 23.271, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V7.9.0, 1 September 2007 (2007-09-01), pages 1-145, XP050363506,

## Description

### FIELD OF TECHNOLOGY

The present disclosure relates to a field of communication technique, and particularly to a method and apparatus for positioning a subscriber zone.

### BACKGROUND OF THE DISCLOSURE

HomeZone service is a conventional service of mobile communication, including two characteristics: zone and charging, wherein the zone information is used to provide a preferential charging for a subscriber making a call or receiving a call within a specified zone, so that the attractiveness to the subscriber is improved.

In the current HomeZone service, preferential zones for a subscriber are composed of a series of cells. The system defines some zones in advance, and each zone includes a cell list. The administrator specifies a corresponding zone for the subscriber, or the subscriber calls an Interactive Voice Response (IVR) access code of a management process, which determines the current position of the subscriber and then specifies the corresponding zone.

During an implementation of the present disclosure, the inventors find that the existing technology has at least the following problems.

The range of the zone is relatively fixed, while a subscriber may be located at the centre of the zone, or the edge of the zone, and the subscriber located at the edge of the zone is easy to be covered by a cell signal outside the zone. Frequently, some base stations halt, are added or are removed, and thus the signal uncertainty at the edge of the zone is increased, so that the subscriber complains frequently. In addition, subscriber zones cannot be accurately positioned by manually setting the subscriber zones, and in this way, the process is too complex, and the operability is poor.

WO 2007/051223 A1 discloses a mobile radio communications network in which zones may be defined for provision of location based services and applications. Various methods are also disclosed for using the defined zones in different ways for different applications. The methods include associating users with zones, updating users of zones with changes to the zones, controlling zone size and dynamically uploading zone profiles to users based on the user's geographical location.

### SUMMARY OF THE DISCLOSURE

The embodiments of the present disclosure provide a method and apparatus for positioning a subscriber zone, which improve the accuracy and operability for positioning a subscriber zone.

One embodiment of the present disclosure provides a method for positioning a subscriber zone, comprising:
receiving (201), by an apparatus for positioning a subscriber zone, a zone positioning request sent by a subscriber;
collecting, by the apparatus, position sample points of the subscriber, wherein the collecting position sample points of the subscriber comprises: sending (203), by the apparatus, an invisible short message, which is invisible at the subscriber's terminal, to the subscriber through a Mobile Switching Centre, MSC, so that the MSC acquires subscriber cell information; and acquiring (204), by the apparatus, the subscriber cell information from the MSC, and taking the acquired subscriber cell information as the subscriber's position sample point.
adding (205), by the apparatus, cells taken as the position sample points to a cell list of the subscriber zone;
setting (206), by the apparatus, a cell occurring most frequently in all the position sample points as a first cell, adding cells having a same address as that of the first cell to the cell list of the subscriber zone, acquiring (207) a switching relation between the first cell and second cells, which is a condition under which the subscriber in the first cell leaves the first cell during communication and switches to second cells, counting frequencies of switching between the first cell and second cells, and adding the second cells, between which and the first cell the frequency of switching is larger than a predetermined switching index, to the cell list of the subscriber zone; and
acquiring (208), by the apparatus, latitudes and longitudes of all cells in the cell list of the subscriber zone to construct a zone rectangle, and adding all cells in the zone rectangle to the cell list of the subscriber zone.

Another embodiment of the present disclosure provides an apparatus for positioning a subscriber zone, which includes:
a collection module (510), configured to receive a zone positioning request sent by a subscriber, and collect position sample points of the subscriber; and
an acquisition module (520), configured to acquire a cell list of the subscriber zone according to the position sample points of the subscriber collected by the collection module;
wherein the collection module further comprises:
   a sending sub-module (611), configured to send an invisible short message, which is invisible at the subscriber's terminal, to the subscriber through an MSC, so that the MSC acquires subscriber cell information; and
   an acquisition sub-module (612), configured to acquire the subscriber cell information from the MSC, and take the acquired subscriber cell information as the subscriber's position sample point; and
   wherein the acquisition module further comprises:
an adding sub-module (621), configured to add the cells taken as the position sample points to the cell list of the subscriber zone;
a setting sub-module (622), configured to set a cell occurring most frequently in the position sample points as a first cell, add cells having the same address as that of the first cell to the cell list of the subscriber zone, acquire the switching relation between the first cell and second cells, which is a condition under which the subscriber in the first cell leaves the first cell during communication and switches to second cells, counting frequencies of switching between the first cell and second cells, and add the second cells, between which and the first cell the frequency of switching is larger than a predetermined switching index, to the cell list of the subscriber zone; and
a constructing sub-module (613), configured to acquire latitudes and longitudes of all cells in the cell list of the subscriber zone to construct a zone rectangle, and add all cells in the zone rectangle to the cell list of the subscriber zone.

The technical solutions according to the embodiments of the present disclosure are advantageous in that the subscriber zone is positioned by collecting the position sample points of the subscriber, so that the accuracy and operability for positioning the subscriber zone is improved.

### BRIEF DESCRIPTION OF THE DRAWINGS

In order to clearly describe the technical solutions in the embodiments of the present disclosure or the existing technology, the drawings used for describing the embodiments or the existing technology are briefly introduced as follows. Obviously, the drawings in the following description are just some examples of the present disclosure, and a person skilled in the art can obtain other drawings based on those drawings without paying any creative effort.
Fig. 1 is a flow diagram illustrating a method for positioning a subscriber zone according to an embodiment of the present disclosure;
Fig. 2 is a flow diagram illustrating a method for positioning a subscriber zone according to another embodiment of the present disclosure;
Fig. 3 is a flow diagram illustrating a method for positioning a subscriber zone according to still another embodiment of the present disclosure;
Fig. 4 is a flow diagram illustrating a method for positioning a subscriber zone according to yet another embodiment of the present disclosure;
Fig. 5 is a configuration diagram of an apparatus for positioning a subscriber zone according to an embodiment of the present disclosure; and
Fig. 6 is a configuration diagram of an apparatus for positioning a subscriber zone according to another embodiment of the present disclosure.

### DETAILED DESCRIPTION OF THE DISCLOSURE

The technical solutions according to the embodiments of the present disclosure are described clearly and completely as follows with reference to the drawings illustrating the embodiments. Obviously, the described embodiments are just a part of embodiments of the present disclosure, and not all the embodiments. Other embodiments obtained by a person skilled in the art based on the described embodiments of the present disclosure without paying any creative effort all fall within the protection scope of the present disclosure.

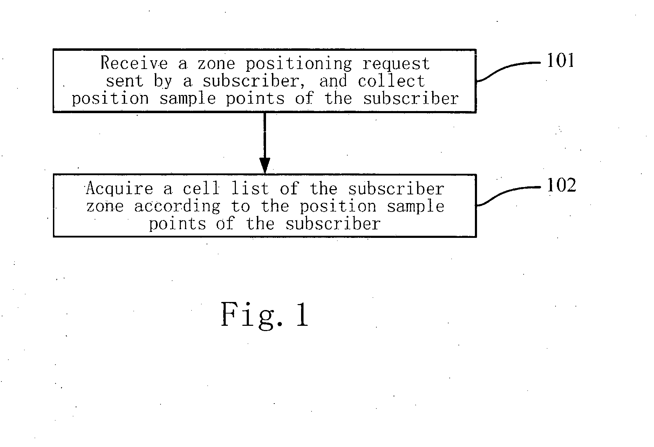

Fig. 1 is a flow diagram illustrating a method for positioning a subscriber zone according to an embodiment of the present disclosure. The method is described as follows.

In step 101, a zone positioning request sent by a subscriber is received, and position sample points of the subscriber are collected.

The zone positioning request may be sent through a voice call, by sending a short message, or by sending an Unstructured Supplementary Services Data (USSD) message. The zone positioning request sent through a voice call carries the first position sample point of the subscriber. Upon receiving the zone positioning request sent by the subscriber, an invisible short message and an Any Time Interrogation (ATI) message may be sent to the subscriber periodically, so as to collect the position sample points of the subscriber. The invisible short message is invisible at the subscriber's terminal and unperceivable to the subscriber. The invisible short message is used to refresh the current subscriber cell information on a Mobile Switching Center (MSC). When the ATI message is sent from a service platform to a Home Location Register (HLR) of the subscriber, the HLR sends a Provide Subscriber Information (PSI) message to the MSC, the MSC returns the current cell information of the subscriber to the HLR, and the HLR returns the current cell information to the service platform. The interval for sending the invisible short message and the ATI message and the number of position sample points may be set and modified dynamically.

In step 102, a cell list of the subscriber zone is acquired according to the position sample points of the subscriber.

When the number of the collected position sample points of the subscriber reaches a preset number, a cell occurring most frequently in the position sample points is set as a first cell, and cells having a station address same as that of the first cell and cells in the position sample points are added to the cell list of the subscriber zone, wherein the first cell and the cells of the same station address are covered by a same base station. The switching relation between the first cell and second cells, i.e., a condition under which the subscriber in the first cell leaves the first cell during communication and switches to the second cells, is acquired, the second cells frequently switching over the first cell are added to the cell list of the subscriber zone, latitudes and longitudes of all cells in the cell list of the subscriber zone are acquired to construct a zone rectangle, and all cells in the zone rectangle are added to the cell list of the subscriber zone.

After the switching relation between the first cell and second cells is acquired, the method further comprises: counting the frequency of switching between the first cell and second cells, and taking the second cells, between which and the first cell the frequency of switching is larger than a predetermined switching index, as the cells frequently switching over the first cell.

After the switching relation between the first cell and second cells is acquired, the method further comprises: sorting the second cells according to their frequencies of switching over the first cell to generate a cell sequence; acquiring at least one second cell from the generated cell sequence according to a predetermined acquisition strategy; and taking the acquired second cell as the cell frequently switching over the first cell. The acquisition strategy includes acquisition condition and the number of the acquired cells, and the acquisition condition may be successively acquiring the second cells in a descending order of their frequencies of switching over the first cell.

The subscriber zone positioning is finished when the cell list of the subscriber zone is acquired. After the cell list of the subscriber zone is acquired, the cell list of the subscriber zone may be stored for the subsequence service.

The technical solution in the embodiment of the present disclosure is advantageous in that the subscriber zone is positioned by collecting the position sample points of the subscriber, so that the accuracy and operability of subscriber zone positioning is improved.

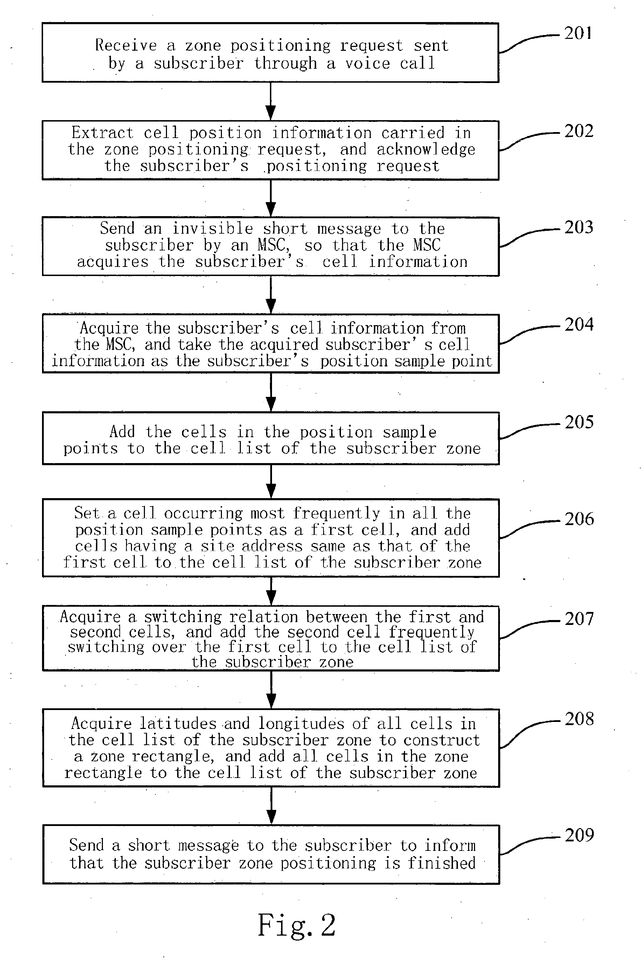

Fig. 2 is a flow diagram of a method for positioning a subscriber zone according to another embodiment of the present disclosure. The method is described as follows.

In step 201, a zone positioning request sent by a subscriber through a voice call is received.

The subscriber dials an access number, the subscriber terminal sends a call request to an MSC via a base station, and the MSC sends the zone positioning request according to the subscription information of the subscriber or the access number.

In step 202, cell position information carried in the zone positioning request is extracted, and the zone positioning request is acknowledged.

The cell position information carried in the zone positioning request is extracted as a first position sample point of the subscriber (hereinafter referred to as C1). Announcement is played to the subscriber and the number pressed by the subscriber is collected to acknowledge the zone positioning request, and then the call is released.

In step 203, an invisible short message is sent to the subscriber through an MSC, so that the MSC acquires subscriber cell information.

An invisible short message is sent to the subscriber through the MSC at a certain interval, so that the MSC acquires the subscriber cell information. The invisible short message is invisible at the subscriber terminal and unperceivable to the subscriber, and the certain interval may be set and dynamically modified.

In step 204, the subscriber cell information is acquired from the MSC, and the acquired subscriber cell information is taken as the subscriber's position sample point.

An ATI message is sent to an HLR, which in turn sends a PSI message to the MSC, and the MSC returns the subscriber cell information via the HLR. The subscriber cell information may be taken as the subscriber's position sample point. Steps 203 and 204 are periodically performed in certain number of times. The collected position sample points are referred to as C2, C3, ..., Cn, respectively, and the number of the position sample points may be set and dynamically modified.

In step 205, the cells taken as the position sample points are added to the cell list of the subscriber zone.

In step 206, a cell occurring most frequently in all the position sample points is set as a first cell, and cells having an address same as that of the first cell are added to the cell list of the subscriber zone.

If multiple cells with the same occurrence frequency exist in all the position sample points, and a cell occurring earliest is set as the first cell, wherein the first cell and the cells of the same address are covered by a same base station.

In step 207, a switching relation between the first cell and second cells is acquired and cells frequently switching over the first cell are added to the cell list of the subscriber zone.

The switching relation between the first cell and second cells, i.e., a condition under which the subscriber in the first cell leaves the first cell during communication and switches to the second cells, is stored in a Base Station Controller (BSC). The switching relation between the first cell and second cells can be obtained through an Operation Support System (OSS) from the BSC. The second cells switching over the first cell are sorted in a descending order of their switching frequencies, and the second cells frequently switching over the first cell are added to the cell list of the subscriber zone.

After the switching relation between the first cell and second cells is acquired, the method further comprises: counting the frequency of switching between the first cell and second cells, and taking the second cells, between which and the first cell the frequency of switching is larger than a predetermined switching index, as the cells frequently switching over the first cell.

After the switching relation between the first cell and second cells is acquired, the method further comprises: sorting the second cells according to their frequencies of switching over the first cell to generate a cell sequence; acquiring at least one second cell from the generated cell sequence according to a predetermined acquisition strategy; and taking the acquired second cell as the cell frequently switching over the first cell. The acquisition strategy includes acquisition condition and the number of the acquired cells, and the acquisition condition may be successively acquiring the second cells in a descending order of their frequencies of switching over the first cell.

In step 208, latitudes and longitudes of all cells in the cell list of the subscriber zone are acquired to construct a zone rectangle, and all cells in the zone rectangle are added to the cell list of the subscriber zone.

A minimum longitude x1, a maximum longitude x2, a minimum latitude y1, and a maximum latitude y2 are selected from the cell basic information to construct the zone rectangle with four points (x1, y1), (x1, y2), (x2, y1) and (x2, y2), and all cells (x1<= longitude<=x2, y1<= latitude<=y2) in the zone rectangle are added to the cell list of the subscriber zone.

The subscriber zone positioning is finished when the cell list of the subscriber zone is acquired. After the cell list of the subscriber zone is acquired, the cell list of the subscriber zone may be stored for the subsequence service.

In step 209, a short message is sent to the subscriber to inform that the subscriber zone positioning is finished.

After the cell list of the subscriber zone is acquired, a short message may be sent to the subscriber to inform that the subscriber zone positioning is finished, and the short message may contain the subscriber zone after the positioning.

The technical solution in the embodiment of the present disclosure is advantageous in that the subscriber zone is positioned by collecting the position sample points of the subscriber through receiving a zone positioning request sent in a voice all, and thus the accuracy and operability of subscriber zone positioning is improved.

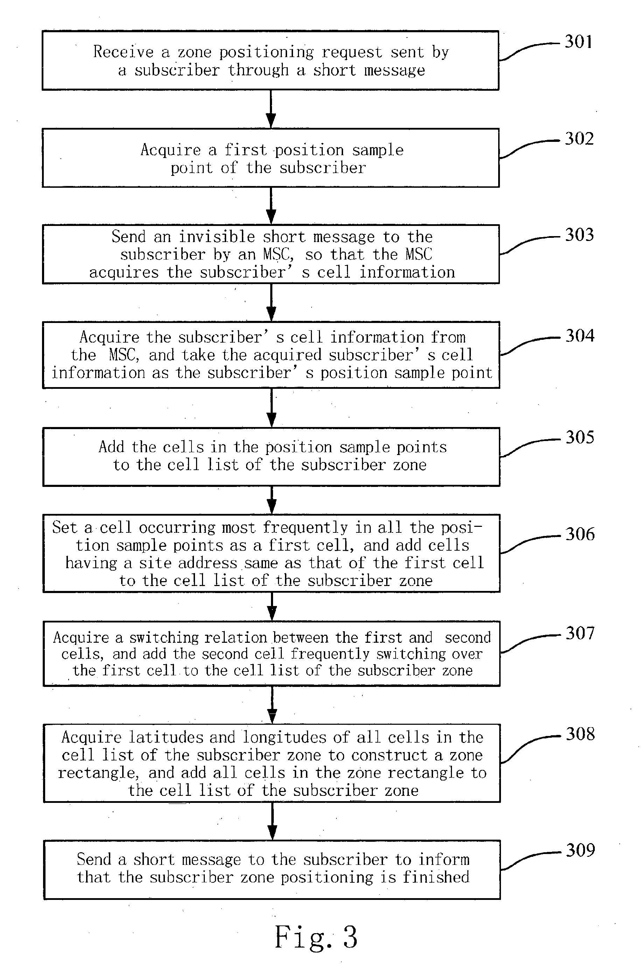

Fig. 3 is a flow diagram of a method for positioning a subscriber zone according to still another embodiment of the present disclosure. The method is described as follows.

In step 301, a zone positioning request sent by a subscriber through a short message is received.

The subscriber sends the short message to an MSC via a base station with a short message access number (SMAN) for the subscriber zone positioning as a reception number of the short message; the MSC sends the short message to a home Short Message Center (SMC) of the subscriber, the SMC sends the short message to a Short Message Gateway (SMG) according to the SMAN, and the SMG sends the zone positioning request according to the SMAN.

In step 302, a first position sample point of the subscriber is acquired.

After the zone positioning request is received, an ATI message is sent to an HLR, so that the HLR sends a PSI message to a MSC, and the MSC returns the subscriber cell information through the HLR as a first position sample point (C1) of the subscriber.

In step 303, an invisible short message is sent to the subscriber through the MSC, so that the MSC acquires subscriber cell information.

An invisible short message is sent to the subscriber through the MSC at a certain interval, so that the MSC acquires the subscriber cell information. The invisible short message is invisible at the subscriber terminal and unperceivable to the subscriber, and the certain interval may be set and dynamically modified.

In step 304, the subscriber cell information is acquired from the MSC, and the acquired subscriber cell information is taken as the subscriber's position sample point.

The ATI message is sent to the HLR, so that the HLR sends the PSI message to the MSC, and the MSC returns the subscriber cell information through the HLR. The subscriber cell information can be taken as the subscriber's position sample point. Steps 303 and 304 are periodically performed in certain number of times. The collected position sample points are referred to as C2, C3, ..., Cn, respectively, and the number of position sample points may be set and dynamically modified.

In step 305, the cells taken as the position sample points are added to the cell list of the subscriber zone.

In step 306, a cell occurring most frequently in all the position sample points is set as a first cell, and cells having an address same as that of the first cell are added to the cell list of the subscriber zone.

If multiple cells with the same occurrence frequency exist in all the position sample points, and a cell occurring earliest is set as the first cell, wherein the first cell and the cells of the same address are covered by a same base station.

In step 307, a switching relation between the first cell and second cells is acquired, and the second cells frequently switching over the first cell are added to the cell list of the subscriber zone.

The switching relation between the first cell and second cells, i.e., a condition under which the subscriber in the first cell leaves the first cell during communication and switches to the second cells, is stored in a BSC. The switching relation between the first cell and second cells can be obtained through an OSS from the BSC. The second cells switching over the first cell are sorted in a descending order of their switching frequencies, and the second cells frequently switching over the first cell are added to the cell list of the subscriber zone.

After the switching relation between the first cell and second cells is acquired, the method further comprises: counting the frequency of switching between the first cell and second cells, and taking the second cells, between which and the first cell the frequency of switching is larger than a predetermined switching index, as the cells frequently switching over the first cell.

After the switching relation between the first cell and second cells is acquired, the method further comprises: sorting the second cells according to their frequencies of switching over the first cell to generate a cell sequence; acquiring at least one second cell from the generated cell sequence according to a predetermined acquisition strategy, and taking the acquired second cell as the cell frequently switching over the first cell. The acquisition strategy includes acquisition condition and the number of the acquired cells, and the acquisition condition may be successively acquiring the second cells in a descending order of their frequencies of switching over the first cell.

In step 308, latitudes and longitudes of all cells in the cell list of the subscriber zone are acquired to construct a zone rectangle, and all cells in the zone rectangle are added to the cell list of the subscriber zone.

A minimum longitude x1, a maximum longitude x2, a minimum latitude y1, and a maximum latitude y2 are selected from the cell basic information to construct the zone rectangle with four points (x1, y1), (x1, y2), (x2, y1), (x2, y2), and all cells (x1<= longitude<=x2, y1<= latitude<=y2) in the zone rectangle are added to the cell list of the subscriber zone.

The subscriber zone positioning is finished when the cell list of the subscriber zone is acquired. After the cell list of the subscriber zone is acquired, the cell list of the subscriber zone may be stored for the subsequence service.

In step 309, a short message is sent to the subscriber to inform that the subscriber zone positioning is finished.

After the cell list of the subscriber zone is acquired, a short message may be sent to the subscriber to inform that the subscriber zone positioning is finished, and the short message may contain the subscriber zone after the positioning.

The technical solution in the embodiment of the present disclosure is advantageous in that the subscriber zone is positioned by receiving a zone positioning request sent in a short message and collecting the position sample points of the subscriber, so that the accuracy and operability of subscriber zone positioning is improved.

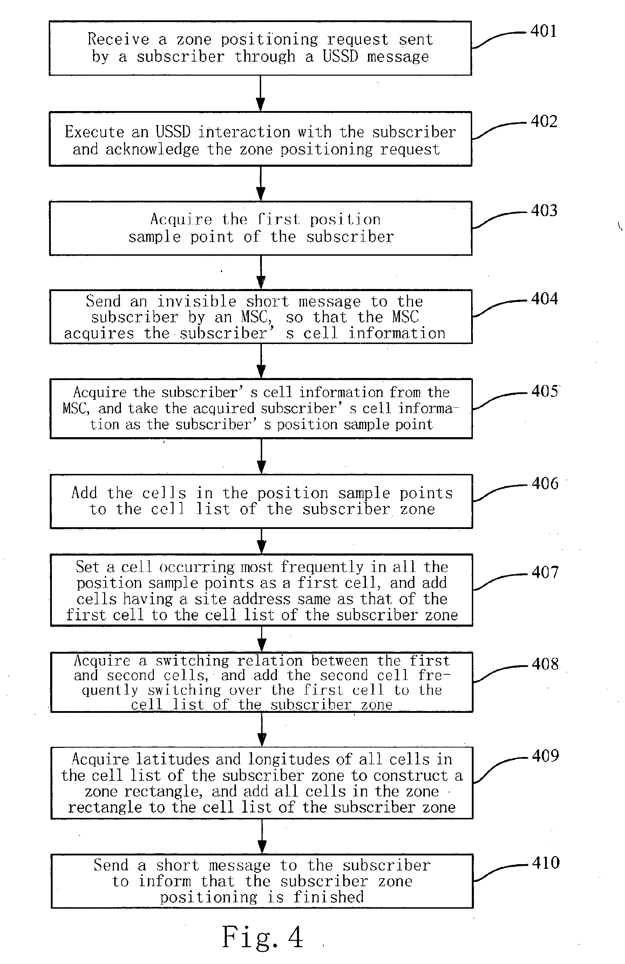

Fig. 4 is a flow diagram of a method for positioning a subscriber zone according to yet another embodiment of the present disclosure. The method is described as follows.

In step 401, a zone positioning request sent by a subscriber in a USSD message is received.

The subscriber calls a USSD access number (e.g., *102#) and sends the USSD message to an MSC; the MSC sends the USSD message to an HLR of the subscriber, the HLR sends the USSD message to a USSD center, and the USSD center sends the zone positioning request according to the USSD access number.

In step 402, a USSD interaction with the subscriber is performed and the zone positioning request is acknowledged.

After the USSD message is received, the USSD interaction with the subscriber is performed, the subscriber's acknowledgement information is acquired to acknowledge the zone positioning request, and then the USSD interaction is terminated.

In step 403, a first position sample point of the subscriber is acquired.

An ATI message is sent to the HLR, so that the HLR sends a PSI message to a MSC, and the MSC returns subscriber cell information through the HLR as the first position sample point (C1).

In step 404, an invisible short message is sent to the subscriber through the MSC, so that the MSC acquires the subscriber cell information.

An invisible short message is sent to the subscriber through the MSC at a certain interval, so that the MSC acquires the subscriber cell information. The invisible short message is invisible at the subscriber terminal and unperceivable to the subscriber, and the certain interval may be set and dynamically modified.

In step 405, the subscriber cell information is acquired from the MSC, and the acquired subscriber cell information is taken as the subscriber's position sample point.

The ATI message is sent to the HLR, the HLR sends the PSI message to the MSC, and the MSC returns the subscriber cell information through the HLR. The subscriber cell information may be taken as the subscriber's position sample point. Steps 403 and 404 are periodically performed in certain number of times. The collected position sample points are referred to as C2, C3, ..., Cn, respectively, and the number of position sample points may be set and dynamically modified.

In step 406, the cells taken as the position sample points are added to the cell list of the subscriber zone.

In step 407, a cell occurring most frequently in all the position sample points is set as a first cell, and cells having an address same as that of the first cell are added to the cell list of the subscriber zone.

If multiple cells with the same occurrence frequency exist in all the position sample points, and a cell occurring earliest is set as the first cell, wherein the first cell and the cells of the same address are covered by a same base station.

In step 408, a switching relation between the first cell and second cells is acquired, and the second cells frequently switching over the first cell are added to the cell list of the subscriber zone.

The switching relation between the first cell and second cells, i.e., a condition under which the subscriber in the first cell leaves the first cell during communication and switches to the second cells, is stored in a BSC. The switching relation between the first cell and second cells can be obtained through an OSS from the BSC. The second cells switching over the first cell are sorted in a descending order of their switching frequencies, and the second cells frequently switching over the first cell are added to the cell list of the subscriber zone.

After the switching relation between the first cell and second cells is acquired, the method further comprises: counting the frequency of switching between the first cell and second cells, and taking the second cells, between which and the first cell the frequency of switching is larger than a predetermined switching index, as the cells frequently switching over the first cell.

After the switching relation between the first cell and second cells is acquired, the method further comprises: sorting the second cells according to their frequencies of switching over the first cell to generate a cell sequence; acquiring at least one second cell from the generated cell sequence according to a predetermined acquisition strategy, and taking the acquired second cell as the cell frequently switching over the first cell. The acquisition strategy includes acquisition condition and the number of the acquired cells, and the acquisition condition may be successively acquiring the second cells in a descending order of their frequencies of switching over the first cell.

In step 409, latitudes and longitudes of all cells in the cell list of the subscriber zone are acquired to construct a zone rectangle, and all cells in the zone rectangle are added to the cell list of the subscriber zone.

A minimum longitude x1, a maximum longitude x2, a minimum latitude y1, and a maximum latitude y2 are selected from the cell basic information to construct the zone rectangle with four points (x1, y1), (x1, y2), (x2, y1), (x2, y2), and all cells (x1<= longitude<=x2, y1<= latitude<=y2) in the zone rectangle are added to the cell list of the subscriber zone.

The subscriber zone positioning is finished when the cell list of the subscriber zone is acquired. After the cell list of the subscriber zone is acquired, the cell list of the subscriber zone may be stored for the subsequence service.

In step 410, a short message is sent to the subscriber to inform that the subscriber zone positioning is finished.

After the cell list of the subscriber zone is acquired, a short message may be sent to the subscriber to inform that the subscriber zone positioning is finished, and the short message may contain the subscriber zone after the positioning.

The technical solution in the embodiment of the present disclosure is advantageous in that the subscriber zone is positioned by receiving a zone positioning request sent in a USSD message and collecting the position sample points of the subscriber, so that the accuracy and operability of subscriber zone positioning is improved.

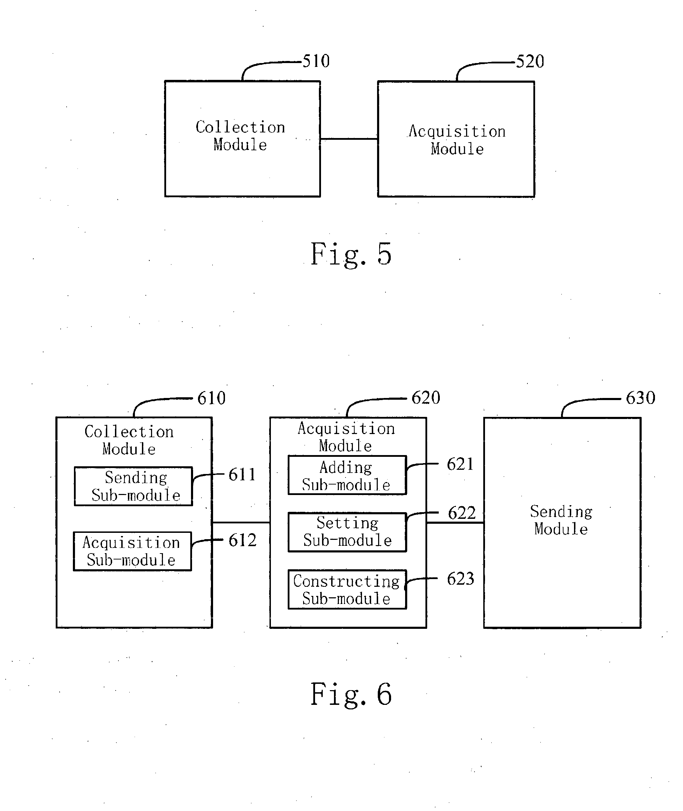

Fig. 5 is a configuration diagram of an apparatus for positioning subscriber zone according to an embodiment of the present disclosure. The apparatus is described as follows.

The apparatus includes a collection module 510, which is configured to receive a zone positioning request sent by a subscriber, and collect position sample points of the subscriber.

The zone positioning request may be sent through a voice call, by sending a short message, or by sending a USSD message. The zone positioning request sent through a voice call carries the first position sample point of the subscriber. After receiving the zone positioning request sent by the subscriber, the collection module 510 can periodically send an invisible short message and an ATI message to the subscriber, so as to collect the position sample points of the subscriber. The invisible short message is invisible at the subscriber terminal and unperceivable to the subscriber. The sending interval of the invisible short message and ATI message as well as the number of position sample points may be set and dynamically modified.

The apparatus further includes an acquisition module 520, which is configured to acquire a cell list of subscriber zone according to the position sample points of the subscriber collected by the collection module 510.

When the number of the subscriber's position sample points collected by the collection module 510 reaches a preset number, the acquisition module 520 sets a cell occurring most frequently in all the position sample points as a first cell, adds cells having an address same as that of the first cell and cells in the position sample points to the cell list of the subscriber zone, wherein the first cell and the cells of the same address are covered by a same base station. The acquisition module 520 acquires the switching relation between the first cell and second cells, i.e., a condition under which the subscriber in the first cell leaves the first cell during communication and switches to the second cells, adds the second cells frequently switching over the first cell to the cell list of the subscriber zone, acquires latitudes and longitudes of all cells in the cell list of the subscriber zone to construct a zone rectangle, and adds all cells in the zone rectangle to the cell list of the subscriber zone.

The subscriber zone positioning is finished when the acquisition module 520 acquires the cell list of the subscriber zone. After the cell list of the subscriber zone is acquired, the cell list of the subscriber zone may be stored for the subsequence service.

The technical solution in the embodiment of the present disclosure is advantageous in that the subscriber zone is positioned by collecting the position sample points of the subscriber, so that the accuracy and operability of subscriber zone positioning is improved.

Fig. 6 is a configuration diagram of an apparatus for positioning subscriber zone according to another embodiment of the present disclosure. The apparatus is described as follows.

The apparatus includes a collection module 610, which is configured to receive a zone positioning request sent by a subscriber, and collect position sample points of the subscriber.

The zone positioning request may be sent through a voice call, by sending a short message, or by sending a USSD message. The zone positioning request sent through a voice call carries the first position sample point of the subscriber. After receiving the zone positioning request sent by the subscriber, the collection module 610 can periodically send an invisible short message and an ATI message to the subscriber, so as to collect the position sample points of the subscriber. The invisible short message is invisible at the subscriber terminal and unperceivable to the subscriber. The sending interval of the invisible short message and ATI message as well as the number of position sample points may be set and dynamically modified.

The apparatus further includes an acquisition module 620, which is configured to acquire a cell list of subscriber zone according to the position sample points of the subscriber collected by the collection module 610.

When the number of the subscriber's position sample points collected by the collection module 610 reaches a preset number, the acquisition module 620 sets a cell occurring most frequently in all the position sample points as a first cell, adds cells having an address same as that of the first cell and cells in the position sample points to the cell list of the subscriber zone, wherein the first cell and the cells of the same address are covered by a same base station. The acquisition module 620 acquires the switching relation between the first cell and second cells, i.e., a condition under which the subscriber in the first cell leaves the first cell during communication and switches to the second cells, adds the second cells frequently switching over the first cell to the cell list of the subscriber zone, acquires latitudes and longitudes of all cells in the cell list of the subscriber zone to construct a zone rectangle, and adds all cells in the zone rectangle to the cell list of the subscriber zone.

The subscriber zone positioning is finished when the acquisition module 620 acquires the cell list of the subscriber zone. After the cell list of the subscriber zone is acquired, the cell list of the subscriber zone may be stored for the subsequence service.

The apparatus further includes a sending module 630, which is configured to send a short message to the subscriber to inform that the subscriber zone positioning is finished.

After the cell list of the subscriber zone is acquired by the apparatus, the sending module 630 can send a short message to the subscriber to inform that the subscriber zone positioning is finished, and the short message may contain the subscriber zone after the positioning.

The collection module 610 further includes: a sending sub-module 611 configured to send an invisible short message and ATI message to the subscriber through the MSC, so that the MSC acquires the subscriber cell information; and an acquisition sub-module 612 configured to acquire the subscriber cell information from the MSC, and take the acquired subscriber cell information as the subscriber's position sample point.

The acquisition module 620 includes: an adding sub-module 621 configured to add the cells in the position sample points to the cell list of the subscriber zone; a setting sub-module 622 configured to set a cell occurring most frequently in the position sample points as a first cell, add cells having an address same as that of the first cell to the cell list of the subscriber zone, acquire the switching relation between the first cell and second cells, and add the second cells frequently switching over the first cell to the cell list of the subscriber zone; a constructing sub-module 623 configured to acquire latitudes and longitudes of all cells in the cell list of the subscriber zone to construct a zone rectangle, and add all cells in the zone rectangle to the cell list of the subscriber zone.

The setting sub-module 622 is further configured to count the frequency of switching between the first cell and second cells, and take the second cells, between which and the first cell the frequency of switching is larger than a predetermined switching index, as the cells frequently switching over the first cell.

The setting sub-module 622 is further configured to sort the second cells according to their frequencies of switching over the first cell to generate a cell sequence, acquire at least one second cell from the generated cell sequence according to a predetermined acquisition strategy, and take the acquired second cell as the cell frequently switching over the first cell. The acquisition strategy includes acquisition condition and the number of the acquired cells, and the acquisition condition may be successively acquiring the second cells in a descending order of their frequencies of switching over the first cell.

The technical solution in the embodiment of the present disclosure is advantageous in that the subscriber zone is positioned by collecting the position sample points of the subscriber, so that the accuracy and operability of subscriber zone positioning is improved.

Through the description of the above embodiments, a person skilled in the art can clearly know that the disclosure can be implemented in a way of software plus necessary general hardware platform, and of course only through hardware, but the former is a better embodiment under many conditions. Based on such understanding, the technical solution of the disclosure substantively, or the portion contributing to the prior art, can be embodied in a form of software product. The software product is stored in a storage medium, including several instructions to enable a mobile equipment (e.g., mobile phone, personal computer, server, network facility, etc.) to execute the methods of the embodiments of the disclosure.

The above description is just directed to the preferred embodiments of the disclosure. To be noted, any change or modification can be made by a person skilled in the art without deviating from the principle of the disclosure, and such change and modification shall be deemed as falling within in the protection scope of the disclosure.

## Claims

1. A method for positioning a subscriber zone, comprising:
Receiving (201), by an apparatus for positioning a subscriber zone, a zone positioning request sent by a subscriber;
collecting, by the apparatus, position sample points of the subscriber, wherein the collecting position sample points of the subscriber comprises: sending (203), by the apparatus, an invisible short message, which is invisible at the subscriber's terminal, to the subscriber through a Mobile Switching Centre, MSC, so that the MSC acquires subscriber cell information; and acquiring (204), by the apparatus, the subscriber cell information from the MSC, and taking the acquired subscriber cell information as the subscriber's position sample point;
adding (205), by the apparatus, cells taken as the position sample points to a cell list of the subscriber zone;
setting (206), by the apparatus, a cell occurring most frequently in all the position sample points as a first cell, adding cells having a same address as that of the first cell to the cell list of the subscriber zone, acquiring (207) a switching relation between the first cell and second cells, which is a condition under which the subscriber in the first cell leaves the first cell during communication and switches to second cells, counting frequencies of switching between the first cell and second cells, and adding the second cells, between which and the first cell the frequency of switching is larger than a predetermined switching index, to the cell list of the subscriber zone; and
acquiring (208), by the apparatus, latitudes and longitudes of all cells in the cell list of the subscriber zone to construct a zone rectangle, and adding all cells in the zone rectangle to the cell list of the subscriber zone.

2. The method according to claim 1, wherein the zone positioning request is sent in any one of the following ways: though a voice call, sending a short message or sending an Unstructured Supplementary Services Data, USSD, message.

3. The method according to claim 2, wherein the zone positioning request sent through a voice call carries the first position sample point of the subscriber cell information.

4. The method according to claim 1, further comprising:
sending (209) a short message to the subscriber to inform that the subscriber zone positioning is finished.

5. An apparatus for positioning a subscriber zone, comprising:
a collection module (510), configured to receive a zone positioning request sent by a subscriber, and collect position sample points of the subscriber; and
an acquisition module (520), configured to acquire a cell list of the subscriber zone according to the position sample points of the subscriber collected by the collection module;
wherein the collection module further comprises:
a sending sub-module (611), configured to send an invisible short message, which is invisible at the subscriber's terminal, to the subscriber through an MSC, so that the MSC acquires subscriber cell information; and
an acquisition sub-module (612), configured to acquire the subscriber cell information from the MSC, and take the acquired subscriber cell information as the subscriber's position sample point; and
wherein the acquisition module further comprises:
an adding sub-module (621), configured to add the cells taken as the position sample points to the cell list of the subscriber zone;
a setting sub-module (622), configured to set a cell occurring most frequently in the position sample points as a first cell, add cells having the same address as that of the first cell to the cell list of the subscriber zone, acquire the switching relation between the first cell and second cells, which is a condition under which the subscriber in the first cell leaves the first cell during communication and switches to second cells, counting frequencies of switching between the first cell and second cells, and add the second cells, between which and the first cell the frequency of switching is larger than a predetermined switching index, to the cell list of the subscriber zone; and
a constructing sub-module (613), configured to acquire latitudes and longitudes of all cells in the cell list of the subscriber zone to construct a zone rectangle, and add all cells in the zone rectangle to the cell list of the subscriber zone.

6. The apparatus according to claim 5, comprising:
a sending module (630), configured to send a short message to the subscriber to inform that the subscriber zone positioning is finished.

## Patentansprüche

1. Verfahren zum Bestimmen der Position einer Teilnehmerzone, umfassend:
Empfangen (201), durch eine Vorrichtung zum Bestimmen der Position einer Teilnehmerzone, einer Zonenpositionsbestimmungs-Anforderung, die von einem Teilnehmer gesendet wird;
Erfassen, durch die Vorrichtung, von Positionsstichprobenpunkten des Teilnehmers, wobei das Erfassen der Positionsstichprobenpunkte des Teilnehmers umfasst: Senden (203), durch die Vorrichtung, einer nicht sichtbaren Kurznachricht, die am Endgerät des Teilnehmers nicht sichtbar ist, an den Teilnehmer durch eine Funkvermittlungsstelle (Mobile Switching Centre, MSC) derart, dass die MSC Teilnehmerzelleninformationen gewinnt; und Gewinnen (204), durch die Vorrichtung, der Teilnehmerzelleninformationen von der MSC und Heranziehen der gewonnenen Teilnehmerzelleninformationen als Positionsstichprobenpunkt des Teilnehmers;
Hinzufügen (205), durch die Vorrichtung, von Zellen, die als Positionsstichprobenpunkte verwendet werden, in eine Zellenliste der Teilnehmerzone;
Einstellen (206), durch die Vorrichtung, einer in allen Positionsstichprobenpunkten am häufigsten auftretenden Zelle als eine erste Zelle, Hinzufügen von Zellen mit derselben Adresse wie die erste Zelle in die Zellenliste der Teilnehmerzone,
Gewinnen (207) einer Umschaltbeziehung zwischen der ersten Zelle und zweiten Zellen, welches eine Bedingung ist, unter der der Teilnehmer in der ersten Zelle die erste Zelle während einer Kommunikation verlässt und auf zweite Zellen umschaltet,
Zählen der Häufigkeit von Umschaltungen zwischen der ersten Zelle und zweiten Zellen und Hinzufügen der zweiten Zellen, zwischen denen und der ersten Zelle die Umschalthäufigkeit größer ist als ein vorab festgelegter Umschaltindex, in die Zellenliste der Teilnehmerzone; und
Gewinnen (208), durch die Vorrichtung, von Breiten und Längen aller Zellen in der Zellenliste der Teilnehmerzone, um ein Zonenrechteck zu konstruieren, und Hinzufügen aller Zellen in dem Zonenrechteck in die Zellenliste der Teilnehmerzone.

2. Verfahren gemäß Anspruch 1, wobei die Zonenpositionsbestimmungs-Anforderung auf eine der folgenden Weisen gesendet wird: über einen Sprachanruf, durch Senden einer Kurznachricht oder durch Senden einer USSD-Nachricht (Unstructured Supplementary Services Data, nicht strukturierte Zusatzdienstdaten).

3. Verfahren gemäß Anspruch 2, wobei die über einen Sprachanruf gesendete Zonenpositionsbestimmungs-Anforderung den ersten Positionsstichprobenpunkt der Teilnehmerzelleninformationen transportiert.

4. Verfahren nach Anspruch 1, ferner umfassend:
Senden (209) einer Kurznachricht an den Teilnehmer, um darüber zu informieren, dass die Teilnehmerzonen-Positionsbestimmung abgeschlossen ist.

5. Vorrichtung zum Bestimmen der Position einer Teilnehmerzone, umfassend:
ein Erfassungsmodul (510), das dafür ausgelegt ist, eine Zonenpositionsbestimmungs-Anforderung zu empfangen, die von einem Teilnehmer gesendet wird, und Positionsstichprobenpunkte des Teilnehmers zu erfassen; und
ein Gewinnungsmodul (520), das dafür ausgelegt ist, eine Zellenliste der Teilnehmerzone gemäß den Positionsstichprobenpunkten des Teilnehmers, die von dem Erfassungsmodul erfasst wurden, zu gewinnen;
wobei das Erfassungsmodul ferner umfasst:
ein Sende-Untermodul (611), das dafür ausgelegt ist, eine nicht sichtbare Kurznachricht, die am Endgerät des Teilnehmers nicht sichtbar ist, durch eine MSC an den Teilenehmer zu senden, so dass die MSC Teilnehmerzelleninformationen gewinnt; und
ein Gewinnungs-Untermodul (612), das dafür ausgelegt ist, die Teilnehmerzelleninformationen von der MSC zu gewinnen und die gewonnenen Teilnehmerzelleninformationen als den Positionsstichprobenpunkt des Teilnehmers heranzuziehen; und
wobei das Gewinnungsmodul ferner umfasst:
ein Hinzufügungs-Untermodul (621), das dafür ausgelegt ist, die Zellen, die als Positionsstichprobenpunkte verwendet werden, der Zellenliste der Teilnehmerzone hinzuzufügen;
ein Einstellungs-Untermodul (622), das dafür ausgelegt ist, eine in den Positionsstichprobenpunkten am häufigsten auftretende Zelle als eine erste Zelle einzustellen, Zellen mit derselben Adresse wie die erste Zelle der Zellenliste der Teilnehmerzone hinzuzufügen, die Umschaltbeziehung zwischen der ersten Zelle und
zweiten Zellen zu gewinnen, welches eine Bedingung ist, unter der der Teilnehmer in der ersten Zelle die erste Zelle während einer Kommunikation verlässt und auf zweite Zellen umschaltet, die Häufigkeit von Umschaltungen zwischen der ersten Zelle und
zweiten Zellen zu zählen und die zweiten Zellen, zwischen denen und der ersten Zelle die Umschalthäufigkeit größer ist als ein vorab festgelegter Umschaltindex, der Zellenliste der Teilnehmerzone hinzuzufügen; und
ein Konstruktions-Untermodul (613), das dafür ausgelegt ist, Breiten und Längen aller Zellen in der Zellenliste der Teilnehmerzone zu gewinnen, um ein Zonenrechteck zu konstruieren, und alle Zellen in dem Zonenrechteck der Zellenliste der Teilnehmerzone hinzuzufügen.

6. Vorrichtung nach Anspruch 5, umfassend:
ein Sendemodul (630), das dafür ausgelegt ist, eine Kurznachricht an den Teilnehmer zu senden, um darüber zu informieren, dass die Teilnehmerzonen-Positionsbestimmung abgeschlossen ist.

## Revendications

1. Procédé de positionnement d'une zone d'abonné, comprenant :
la réception (201), par un appareil de positionnement de zone d'abonné, d'une requête de positionnement de zone envoyée par un abonné ;
la collecte, par l'appareil, de points échantillons de position de l'abonné, la collecte de points échantillons de position de l'abonné comprenant : l'envoi (203), par l'appareil, d'un message court invisible, lequel est invisible au niveau du terminal de l'abonné, à l'abonné par le biais d'un centre de commutation de services mobiles, MSC, de telle sorte que le MSC acquière des informations de cellule d'abonné ; et l'acquisition (204), par l'appareil, des informations de cellule d'abonné depuis le MSC, et l'utilisation des informations de cellule d'abonné acquises comme points échantillons de position de l'abonné ;
l'ajout (205), par l'appareil, des cellules utilisées comme points échantillons de position à une liste de cellules de la zone d'abonné ;
l'établissement (206), par l'appareil, d'une cellule apparaissant le plus fréquemment dans tous les points échantillons de position comme première cellule, l'ajout de cellules ayant la même adresse que celle de la première cellule à la liste de cellules de la zone d'abonné, l'acquisition (207) d'une relation de commutation entre la première cellule et les deuxièmes cellules, laquelle est une condition selon laquelle l'abonné dans la première cellule quitte la première cellule durant la communication et passe aux deuxièmes cellules, le comptage des fréquences de commutation entre les première et deuxièmes cellules, et l'ajout des deuxièmes cellules, entre lesquelles et la première cellule la fréquence de commutation est plus grande qu'un indice de commutation prédéterminé, à la liste de cellules de la zone d'abonné ; et
l'acquisition (208), par l'appareil, de latitudes et longitudes de toutes les cellules dans la liste de cellules de la zone d'abonné pour construire un rectangle de zone, et l'ajout de toutes les cellules se trouvant dans le rectangle de zone à la liste de cellules de la zone d'abonné.

2. Procédé selon la revendication 1, dans lequel la requête de positionnement de zone est envoyée selon l'un quelconque des modes suivants : par appel vocal, par envoi d'un message court ou par envoi d'un message de données de services supplémentaires non structurées, USSD.

3. Procédé selon la revendication 2, dans lequel la requête de positionnement de zone envoyée par appel vocal comporte le premier point échantillon de position des informations de cellule d'abonné.

4. Procédé selon la revendication 1, comprenant en outre :
l'envoi (209) d'un message court à l'abonné pour l'informer que le positionnement de zone d'abonné est terminé.

5. Appareil de positionnement d'une zone d'abonné, comprenant :
un module de collecte (510) configuré pour recevoir une requête de positionnement de zone envoyée par un abonné, et collecter des points échantillons de position de l'abonné ; et
un module d'acquisition (520), configuré pour acquérir une liste de cellules de la zone d'abonné en fonction des points échantillons de position de l'abonné collectés par le module de collecte ;
dans lequel le module de collecte comprend en outre :
un sous-module d'envoi (611), configuré pour envoyer un message court invisible, lequel est invisible au niveau du terminal de l'abonné, à l'abonné par le biais d'un MSC, de telle sorte que le MSC acquière des informations de cellule d'abonné ; et
un sous-module d'acquisition (612), configuré pour acquérir les informations de cellule d'abonné depuis le MSC, et utiliser les informations de cellule d'abonné acquises comme points échantillons de position de l'abonné ; et
dans lequel le module d'acquisition comprend en outre :
un sous-module d'ajout (621), configuré pour ajouter les cellules utilisées comme points échantillons de position à la liste de cellules de la zone d'abonné ;
un sous-module d'établissement (622), configuré pour établir une cellule apparaissant le plus fréquemment dans les points échantillons de position comme première cellule, ajouter des cellules ayant la même adresse que celle de la première cellule à la liste de cellules de la zone d'abonné, acquérir la relation de commutation entre la première cellule et les deuxièmes cellules, laquelle est une condition selon laquelle l'abonné dans la première cellule quitte la première cellule durant la communication et passe aux deuxièmes cellules, compter les fréquences de commutation entre les première et deuxièmes cellules, et ajouter les deuxièmes cellules, entre lesquelles et la première cellule la fréquence de commutation est plus grande qu'un indice de commutation prédéterminé, à la liste de cellules de la zone d'abonné ; et
un sous-module de construction (613), configuré pour acquérir les latitudes et longitudes de toutes les cellules dans la liste de cellules de la zone d'abonné pour construire un rectangle de zone, et ajouter toutes les cellules se trouvant dans le rectangle de zone à la liste de cellules de la zone d'abonné.

6. Appareil selon la revendication 5, comprenant :
un module d'envoi (630), configuré pour envoyer un message court à l'abonné pour l'informer que le positionnement de zone d'abonné est terminé.
